# FASCICULE DE BREVET EUROPEEN

(11) **EP 3 137 323 B1**
(45) Date de publication et mention de la délivrance du brevet: **17.03.2021**
(21) Numéro de dépôt: 15725776.7
(22) Date de dépôt: 22.04.2015
(51) Int. Cl.: B60H 1/00, B60W 10/06, B60W 10/08, B60W 20/00, B60W 50/00

(54) **SYSTEME DE CONTROLE DU MODE DE MOTRICITE D'UN VEHICULE AUTOMOBILE HYBRIDE**
SYSTEM ZUR STEUERUNG DES FAHRBARKEITSMODUS EINES HYBRIDKRAFTFAHRZEUGS
SYSTEM FOR CONTROLLING THE DRIVABILITY MODE OF A HYBRID MOTOR VEHICLE

(30) Priorité: 29.04.2014 FR 1453857
(43) Date de publication de la demande: 08.03.2017
(73) Titulaire: Renault S.A.S., 92100 Boulogne-Billancourt (FR)
(72) Inventeur: L'HUILLIER, Jean-Marie, F-92130 Issy Les Moulineaux (FR); ALEXANDRE, Alain, F-MAULE 78580 (FR)
(86) Numéro de dépôt international: PCT/FR2015/051086
(87) Numéro de publication internationale: WO 2015/166166

(56) Documents cités:
- EP-A1- 2 426 023
- WO-A1-2006/057433
- US-A1- 2010 108 032
- US-A1- 2013 103 242

## Description

L'invention concerne le contrôle du mode de motricité de véhicules automobiles hybrides, en particulier ceux dotés d'un moteur thermique et d'un moteur électrique.

Les véhicules automobiles classiques sont généralement munis d'un système de chauffage avec un aérotherme transférant de la chaleur dégagée par le moteur thermique à un volume d'eau de chauffage. L'eau ainsi chauffée véhicule son énergie en la transférant à l'air de l'habitacle.

On connaît aujourd'hui des véhicules hybrides, par exemple comprenant un moteur thermique et un moteur électrique alimenté par une batterie. Ces véhicules sont également dotés d'un système de contrôle du mode de motricité dont la fonction est de piloter la mise en marche de l'un et/ou de l'autre des deux moteurs. Certains contrôles des modes de motricité sont également aptes à faire fonctionner le moteur électrique en génératrice.

De manière classique, le système de contrôle du mode de motricité attribue différents modes de motricité selon différentes situations de conduite, telles que démarrage, déplacement en vitesse de croisière, accélération, décélération, arrêt du véhicule. Par exemple, lors d'une accélération, le système de contrôle active généralement les deux moteurs du véhicule, le moteur électrique soulageant le moteur thermique. En décélération, le moteur électrique fonctionne logiquement en frein moteur, c'est-à-dire comme une génératrice de manière à recharger la batterie du véhicule tout en exerçant une action de freinage sur ce dernier.

Dans certains véhicules, l'attribution d'un mode de motricité dépend également du niveau de charge de la batterie. En effet, si le véhicule accélère avec une batterie complètement chargée, le système de contrôle peut décider de ne mettre en marche que le moteur électrique. Il en résulte une consommation et une pollution moins importantes.

Ainsi, dans un véhicule hybride muni d'un dispositif de chauffage, il arrive que le fonctionnement par intermittence du moteur thermique perturbe le fonctionnement du chauffage en réduisant la température de l'eau de chauffage. Cette perturbation occasionne un moindre confort pour le conducteur et une consommation de carburant accrue.

Le document US2010/108032 divulgue un dispositif conforme au préambule de la revendication 1.

Le but de l'invention est donc de proposer un système de contrôle du mode de motricité d'un véhicule automobile hybride qui ne perturbe pas le fonctionnement du système de chauffage du véhicule.

Selon un premier aspect, l'invention a pour objet un système de contrôle du mode de motricité d'un véhicule automobile hybride doté d'un moteur thermique et d'un moteur électrique, comprenant :
- des premiers moyens de mesure de conditions de roulage du véhicule,
- des deuxièmes moyens de mesure du niveau de charge de la batterie du véhicule,
- des premiers moyens de contrôle du moteur thermique,
- des seconds moyens de contrôle du moteur électrique, et
- des moyens de calcul aptes à émettre un premier signal d'activation du moteur thermique, et un second signal d'activation du moteur électrique, en fonction des conditions de roulage et du niveau de charge de la batterie.

En outre, le système de contrôle comprend des troisièmes moyens de mesure d'au moins une caractéristique relative au fonctionnement du système de chauffage du véhicule, le premier signal d'activation et le second signal d'activation étant élaborés à partir de la caractéristique relative au fonctionnement du système de chauffage.

De cette façon, il est possible de prendre en compte une caractéristique relative au fonctionnement du système de chauffage pour déterminer un mode de motricité optimal du véhicule. Il en résulte une efficacité accrue du système de chauffage, et ainsi des économies d'énergie et un meilleur confort pour le conducteur.

Selon un mode de réalisation, les premiers moyens de mesure des conditions de roulage comprennent des capteurs de mesure de paramètres de roulage tels que le type de conduite, le type de trajet, l'accélération ou le freinage du véhicule et l'arrêt du véhicule.

Suivant l'invention, les moyens de calcul comprennent un premier comparateur apte à calculer un premier signal d'écart de niveau de charge de la batterie du véhicule à partir du niveau de charge de la batterie et d'un niveau de charge de référence prédéfini.

Suivant l'invention, les moyens de calcul sont dotés d'un premier correcteur proportionnel dérivé intégral apte à émettre un premier signal de correction du niveau de charge de la batterie en fonction du premier signal d'écart calculé par le premier comparateur.

Dans un autre mode de réalisation, la caractéristique relative au fonctionnement du système de chauffage est la température d'eau du système de chauffage du véhicule.

La température de l'eau de chauffage est un paramètre représentatif de l'efficacité du système de chauffage, ce qui permet un contrôle plus sensible de cette dernière.

On peut en outre prévoir que les moyens de calcul comprennent un second comparateur apte à calculer un second signal d'écart de température d'eau du système de chauffage du véhicule à partir de la caractéristique relative au fonctionnement du système de chauffage et d'une température d'eau de référence prédéfinie.

On peut en outre munir les moyens de calcul d'un second correcteur proportionnel dérivé intégral apte à émettre un second signal de correction du niveau de charge de la batterie en fonction du second signal d'écart calculé par le second comparateur.

Dans un mode de réalisation préféré, le deuxième signal d'activation du moteur électrique contient des informations permettant de faire fonctionner le moteur électrique du véhicule en mode génératrice.

Dans un autre mode de réalisation, l'un au moins des signaux d'activation contient des informations permettant de contrôler le couple et/ou la vitesse de rotation du (des) moteur(s) correspondant(s).

Selon un autre aspect, l'invention concerne un procédé de contrôle du mode de motricité d'un véhicule automobile hybride électrique, comprenant une première phase de mesure de conditions de roulage et du niveau de charge de la batterie, une deuxième phase de calcul d'un premier signal d'activation du moteur thermique et d'un second signal d'activation du moteur électrique en fonction des conditions de roulage et du niveau de charge de la batterie. Lors de la première phase de mesure, on mesure au moins une caractéristique relative au fonctionnement du système de chauffage du véhicule, le premier signal d'activation et le deuxième signal d'activation étant élaborés à partir de la caractéristique relative au fonctionnement du système de chauffage.

D'autres buts, caractéristiques et avantages de l'invention apparaîtront à la lecture de la description suivante de quelques modes de réalisation constituant uniquement des exemples non limitatifs, et faite en référence aux dessins annexés sur lesquels :
- la figure 1 est un schéma synoptique d'un véhicule automobile hybride comprenant un système de contrôle des modes de motricité selon un mode de réalisation de l'invention,
- la figure 2 est un schéma du système de contrôle du mode de réalisation de la figure 1, et
- la figure 3 représente un procédé de contrôle du mode de motricité selon un mode de réalisation de l'invention.

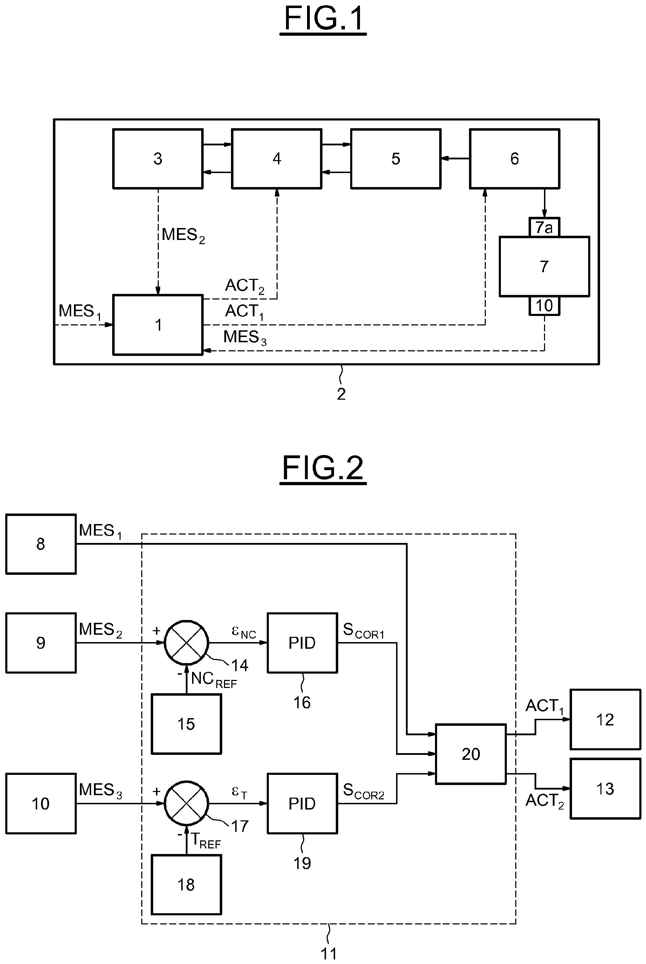

Le véhicule 2 schématiquement illustré sur la figure 1 est un véhicule automobile hybride. Il est doté d'un système de contrôle du mode de motricité 1 et comprend un moteur thermique 6 et un moteur électrique 4, reliés à un embrayage 5. Le véhicule 2 comprend une batterie 3 pour alimenter le moteur électrique 4. Le moteur électrique 4 est en outre capable de fonctionner en mode génératrice, c'est-à-dire que l'arbre moteur est entraîné par l'embrayage, le moteur rechargeant la batterie. Il comprend en outre un système de chauffage 7 muni d'un aérotherme 7a.

Les transferts d'énergie qui ont lieu entre ces différents composants ont été représentés par des flèches sur la figure 1. La batterie 3 envoie de l'énergie électrique au moteur électrique 4. La batterie 3 se recharge à partir de l'énergie mécanique de l'embrayage 5, par l'intermédiaire du moteur électrique 4. L'énergie mécanique de l'embrayage 5 peut provenir des roues, si le véhicule est en mouvement, ou du moteur thermique, si le véhicule est à l'arrêt. Le moteur thermique 6 communique également de l'énergie au système de chauffage 7 au moyen de l'aérotherme 7a. Enfin, le moteur électrique 4 et le moteur thermique 6 communiquent de l'énergie mécanique à l'embrayage 5.

Le système de contrôle 1 recueille des informations émises par certains des composants précités. En particulier, le système 1 recueille un ensemble de signaux porteurs d'informations concernant les conditions de roulage du véhicule. On entend par mesure des conditions de roulage le fait de déterminer la situation de fonctionnement dans laquelle se trouve le véhicule à un instant défini. Le véhicule comprend à cet égard une multitude de moyens de mesure des conditions de roulage tels que le compteur de vitesse du véhicule, un moyen de mesure de la pression sur les pédales d'accélérateur et de frein, un détecteur apte à déterminer le rapport de vitesses enclenché, etc. Par exemple, le système de contrôle 1 reçoit les signaux S_{ACC}, S_{FR}, Sv qui contiennent respectivement les informations d'accélération du véhicule, de freinage, de rapport de vitesses enclenché. On recueille ces signaux afin de savoir par exemple si le véhicule 2 est en phase de démarrage, d'accélération, de croisière, de décélération, d'arrêt... On fait une synthèse de tous ces signaux et on émet un signal MES₁ résumant les informations mesurées par les moyens de mesure des conditions de roulage. De cette manière, le système de contrôle 1 peut détecter les conditions de roulage du véhicule automobile, ce qui lui fournit un premier critère pour déterminer quel(s) moteur(s) doit (doivent) être mis en marche.

Le système de contrôle 1 reçoit également un signal MES₂ contenant des informations en provenance de la batterie 3, concernant son niveau de charge. La batterie se décharge lorsqu'on fait fonctionner le moteur électrique 4 et se recharge lorsqu'on fait fonctionner le moteur thermique 6. Le niveau de charge de la batterie 3 est donc amené à varier fortement, et la valeur du signal MES₂ est un deuxième critère de décision pour le système de contrôle 1.

Le système de contrôle 1 recueille par ailleurs des signaux émis par des capteurs du système de chauffage 7 du véhicule. En particulier, des troisièmes moyens de mesure sont prévus pour déterminer une caractéristique relative au fonctionnement du système de chauffage du véhicule. Ces troisièmes moyens comprennent par exemple un capteur 10 disposé de manière à mesurer la température de l'eau MES₃ du système de chauffage 7 du véhicule qui est transmise au système de contrôle 1. Cette information constitue un troisième critère de décision pour celui-ci.

Le système de contrôle 1 est par ailleurs apte à émettre un premier signal d'activation ACT₁ et un second signal d'activation ACT₂. Le premier signal d'activation ACT₁ permet de mettre en marche ou de mettre à l'arrêt le moteur thermique 6. Le second signal d'activation ACT₂ permet de mettre en marche ou de mettre à l'arrêt le moteur électrique 4.

On a représenté sur la figure 2 le système de contrôle 1 de manière plus précise. On voit en particulier que le système 1 comprend des moyens de calcul 11, aptes à coopérer avec les éléments représentés sur la figure 1.

En particulier, les moyens de calcul 11 coopèrent avec les premiers moyens de mesure 8 de conditions de roulage du véhicule. Les premiers moyens de mesure 8, qui ont pour fonction de déterminer les conditions de roulage du véhicule, sont en outre aptes à analyser les signaux reçus pour émettre un premier signal de mesure MES₁.

Les moyens de calcul 11 reçoivent le signal MES₂ provenant des deuxièmes moyens de mesure 9. En l'espèce, il s'agit d'un capteur du niveau de charge de la batterie du véhicule.

Les moyens de calcul 11 recueillent enfin le signal MES₃ de mesure de la température d'eau de chauffage émis par les troisièmes moyens de mesure 10.

Le premier signal d'activation ACT₁ du moteur thermique 6 du véhicule, et le second signal d'activation ACT₂ du moteur électrique 4 du véhicule sont fournis respectivement à un premier module de commande 12 du moteur thermique, et à un second module de commande 13 du moteur électrique. Le module de commande 12 comporte des moyens matériels et logiciels le rendant apte à commander la mise en marche ou la mise à l'arrêt du moteur thermique 6. Le second module de commande 13 est quant à lui apte à mettre en marche ou mettre à l'arrêt le moteur électrique 4. En outre, le second module de commande 13 est apte à faire fonctionner le moteur électrique en mode génératrice.

Les moyens de calcul 11 comprennent un comparateur 14 et un premier module de paramétrage 15. Ce module 15 sert à paramétrer un niveau de charge de référence NC_{REF} de la batterie 3 du véhicule. Par exemple, si la batterie est totalement vide, on ne peut mettre en marche que le moteur thermique. Par ailleurs, si la batterie est totalement pleine, on ne peut pas la charger davantage, et l'énergie récupérée suite à un freinage est dispersée. Chacune de ces situations extrêmes entraine une consommation de carburant et une émission de polluants plus importantes. Il existe alors un niveau de charge de référence NC_{REF} pour un usage optimal autour duquel le niveau de charge réel de la batterie du véhicule doit se maintenir pour minimiser le risque de se trouver dans l'une de ces situations. Ce niveau de charge de référence est paramétré à l'avance au moyen du premier module de paramétrage 15. Au moyen du comparateur 14, les moyens de calcul 11 calculent l'écart ε_{NC} entre le niveau de charge de la batterie et le niveau de charge de référence.

Les moyens de calcul 11 comprennent un premier correcteur proportionnel dérivé intégral (PID) 16. Celui-ci traite le signal d'écart ε_{NC} de manière à émettre un premier signal de correction S_{COR1} du niveau de charge de la batterie du véhicule. On pourra par exemple incorporer le correcteur 16 dans un système de correction en boucle fermée.

Les moyens de calcul 11 comprennent un second comparateur 17, un second module de paramétrage 18 et un second correcteur proportionnel dérivé intégral 19. Le second module de paramétrage 18 permet d'intégrer une valeur de température d'eau de référence T_{REF}. Il s'agit de la température de l'eau de chauffage pour laquelle on a un fonctionnement optimal du système de chauffage 7 du véhicule. Le signal d'écart de température d'eau ε_{T} est calculé au moyen du comparateur 17. Ce signal est transmis au correcteur 19 qui émet un second signal de correction S_{COR2} de la température d'eau du véhicule.

Les moyens de calcul 11 comprennent en outre un calculateur 20 qui reçoit les signaux de correction S_{COR1} et S_{COR2}, ainsi que le premier signal de mesure MES₁. Le calculateur 20 traite ces trois signaux afin de prendre une décision concernant le mode de motricité le plus approprié.

Par exemple, lors d'une phase d'accélération importante avec une batterie à moitié chargée, le calculateur 20 décide généralement de faire fonctionner le moteur thermique et le moteur électrique conjointement. Le calculateur 20 délivre alors les signaux d'activation ACT₁ et ACT₂ respectivement au premier module de commande 12 et au second module de commande 13. Il en résulte la mise en marche des deux moteurs. Dans un autre exemple, si la batterie n'est pas pleine et que le véhicule ralentit, alors on peut arrêter le moteur thermique 6 et faire fonctionner le moteur électrique 4 en mode génératrice.

On peut envisager un autre mode de réalisation dans lequel au moins l'un des signaux d'activation ACT₁ et ACT₂ contient, outre l'information de mise en marche ou d'arrêt du moteur qui lui correspond, les informations requises pour piloter le moteur en couple et/ou en vitesse de rotation. Un contrôle plus précis du mode de motricité est alors rendu possible. Dans un tel mode de réalisation, les modules de commande 12 et 13 comprennent des moyens matériels et logiciels permettant de contrôler en couple et en vitesse de rotation les moteurs du véhicule, selon les instructions apportées par les signaux d'activation ACT₁ et ACT₂.

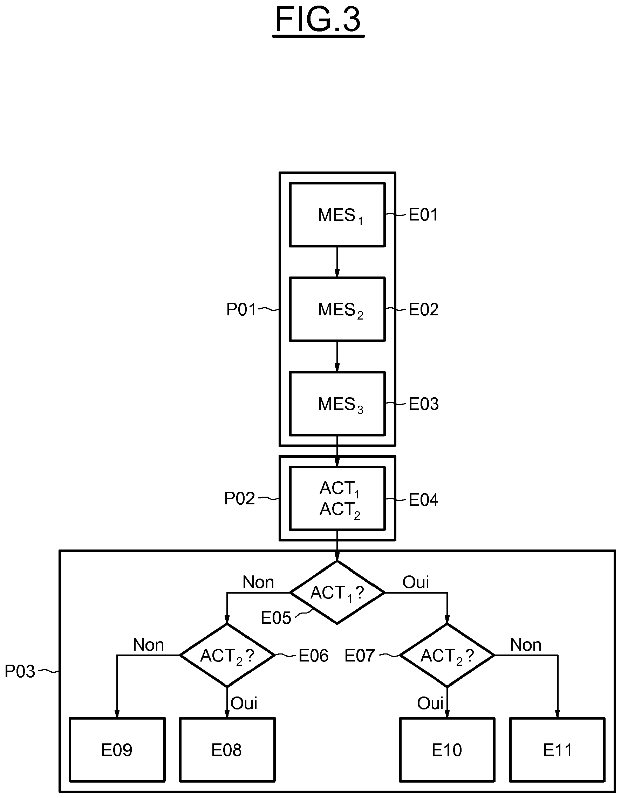

On a représenté en figure 3 un procédé de contrôle du mode de motricité d'un véhicule hybride selon un mode de mise en œuvre de l'invention. Dans cet exemple, le véhicule hybride comprend un moteur thermique et un moteur électrique.

Le procédé de contrôle peut être mis en œuvre à partir d'un système de contrôle tel que décrit aux figures 1 à 3. Le procédé de contrôle peut être mis en œuvre à n'importe quel instant dès lors que le véhicule est en cours d'utilisation.

Le procédé comprend une première étape E01 de mesure de paramètres relatifs aux conditions de roulage du véhicule. Comme précédemment, on entend par conditions de roulage des situations dans lesquelles peut se trouver le véhicule, par exemple des situations de démarrage, de déplacement en vitesse de croisière, d'accélération, de décélération, d'arrêt du véhicule. A cet égard, on pourra en particulier effectuer des mesures d'accélération, de vitesse, de la pression sur les pédales d'accélérateur et de frein, voire du rapport de vitesses enclenché.

Le procédé comprend une deuxième étape E02 de mesure du niveau de charge de la batterie du véhicule.

Le procédé comprend une troisième étape E03 de mesure de paramètres relatif au fonctionnement du système de chauffage du véhicule. En l'espèce, on mesure un paramètre qui est la température de l'eau de chauffage du système de chauffage.

Les étapes E01, E02 et E03 constituent une première phase de mesure P01. On note en particulier que la phase P01 comprend une étape de mesure d'une caractéristique relative au fonctionnement du système de chauffage du véhicule.

Le procédé comprend ensuite une deuxième phase de calcul P02 comprenant une quatrième étape E04 d'élaboration de deux signaux d'activation à partir des signaux mesurés lors de la première phase de mesure P01. Au cours de cette étape, on analyse des informations telles que les conditions de roulage du véhicule, le niveau de charge de la batterie et la température de l'eau de chauffage de manière à déterminer le mode de motricité du véhicule le plus approprié. En d'autres termes, on détermine si le véhicule doit mettre en marche l'un et/ou l'autre de ses moteurs. On émet alors un premier signal d'activation du moteur thermique ACT₁ et un deuxième signal d'activation du moteur électrique ACT₂. Le premier signal ACT₁ sert de support aux ordres de mise en marche et de mise à l'arrêt du moteur thermique du véhicule, tandis que le second signal ACT₂ supporte les mêmes ordres concernant le moteur électrique du véhicule. En outre, le second signal ACT₂ est capable de faire fonctionner le moteur électrique du véhicule en mode génératrice. On peut également envisager, sans sortir du cadre de l'invention, un procédé dans lequel les signaux élaborés lors de cette quatrième étape contiennent respectivement des informations permettant de piloter en couple et en vitesse de rotation chacun des deux moteurs du véhicule.

Le procédé comprend ensuite une première étape de test E05. Au cours de cette étape, on analyse le signal ACT₁ d'activation du moteur thermique du véhicule. On rappelle que le signal ACT₁, comme le signal ACT₂, peut avoir deux valeurs, l'une notée OUI entrainant la mise en marche du moteur thermique, l'autre notée NON entrainant la mise à l'arrêt de celui-ci.

Si la valeur du signal ACT₁ est NON, on met en œuvre une deuxième étape de test E06, portant sur la valeur du signal ACT₂. Si cette valeur est OUI, on applique une étape E08 au cours de laquelle on met en marche le moteur électrique du véhicule et on met à l'arrêt le moteur thermique. Si la valeur est NON, on applique une étape E09 au cours de laquelle on met à l'arrêt les deux moteurs du véhicule.

Si la valeur du signal ACT₁ est OUI, on met en œuvre une troisième étape de test E07, portant sur l'analyse de la valeur du signal ACT₂. Si cette valeur est OUI, on applique une étape E10 au cours de laquelle on met en marche les deux moteurs du véhicule. Si la valeur est NON, on applique une étape E11 au cours de laquelle on met à l'arrêt le moteur électrique du véhicule et on met en marche le moteur thermique.

Les étapes E05, E06, E07, E08, E09, E10 et E11 constituent une troisième phase de pilotage P03.

Ainsi, au moyen d'un tel procédé, il est possible de déterminer et mettre en œuvre un mode de motricité optimal en fonction de paramètres et en particulier d'une caractéristique relative au fonctionnement du système de chauffage du véhicule. Il en résulte un meilleur fonctionnement de ce système de chauffage et donc un meilleur confort pour le conducteur, et des économies d'énergie.

Au moyen d'un système de contrôle tel que celui décrit en référence aux figures 1 à 3, on dispose de moyens pour déterminer le mode de motricité optimal en tenant compte d'une caractéristique relative au fonctionnement du système de chauffage du véhicule.

En utilisant un capteur de température de l'eau de chauffage, on adapte le mode de motricité choisi à un paramètre particulièrement pertinent par rapport à l'efficacité du système de chauffage.

En utilisant des signaux d'activation permettant de piloter l'un ou l'autre des moteurs en couple et en vitesse de rotation, on s'autorise un contrôle des modes de motricité encore plus fin, permettant une efficacité du système de chauffage renforcée.

## Revendications

1. Système (1) de contrôle du mode de motricité d'un véhicule automobile hybride (2) doté d'un moteur thermique (6) et d'un moteur électrique (4), comprenant :
- des premiers moyens de mesure (8) de conditions de roulage du véhicule,
- des deuxièmes moyens de mesure (9) du niveau de charge de la batterie (3) du véhicule,
- des premiers moyens de contrôle (12) du moteur thermique (6),
- des seconds moyens de contrôle (13) du moteur électrique (4), et
- des moyens de calcul (11) aptes à émettre un premier signal d'activation (ACT₁) du moteur thermique (6), et un second signal d'activation (ACT₂) du moteur électrique (4), en fonction des conditions de roulage et du niveau de charge,
le système (1) comprenant en outre des troisièmes moyens de mesure (10) d'au moins une caractéristique relative au fonctionnement du système de chauffage (7) du véhicule, le premier signal d'activation (ACT₁) et le second signal d'activation (ACT₂) étant élaborés à partir de la caractéristique relative au fonctionnement du système de chauffage,
**caractérisé en ce que** les moyens de calcul comprennent un premier comparateur (14) apte à calculer un premier signal d'écart (ε_{NC}) de niveau de charge de la batterie (3) du véhicule à partir du niveau de charge et d'un niveau de charge de référence (NC_{REF}) prédéfini, et **en ce que** les moyens de calcul comprennent un premier correcteur (16) proportionnel dérivé intégral apte à émettre un premier signal de correction (S_{COR1}) du niveau de charge de la batterie en fonction du premier signal d'écart (ε_{NC}) calculé par le premier comparateur (14).

2. Système de contrôle selon la revendication 1, **caractérisé en ce que** les premiers moyens de mesure (8) des conditions de roulage comprennent des capteurs de mesure de paramètres de roulage tels que le type de conduite, le type de trajet, l'accélération ou le freinage du véhicule et l'arrêt du véhicule.

3. Système de contrôle selon la revendication 1 ou 2, **caractérisé en ce que** la caractéristique relative au fonctionnement du système de chauffage est la température d'eau (MES₃) du système de chauffage (7) du véhicule.

4. Système de contrôle selon la revendication 3, **caractérisé en ce que** les moyens de calcul comprennent un second comparateur (17) apte à calculer un second signal d'écart (ε_{T}) de température d'eau du système de chauffage (7) du véhicule à partir de la température d'eau du système de chauffage et d'une température d'eau de référence (T_{REF}) prédéfinie.

5. Système de contrôle selon la revendication 4, **caractérisé en ce que** les moyens de calcul comprennent un second correcteur (19) proportionnel dérivé intégral apte à émettre un second signal de correction (S_{COR2}) du niveau de charge de la batterie (3) en fonction du second signal d'écart (ε_{T}) calculé par le second comparateur (17).

6. Système de contrôle selon l'une quelconque des revendications 1 à 5, **caractérisé en ce que** le deuxième signal d'activation (ACT₂) du moteur électrique contient des informations permettant de faire fonctionner le moteur électrique (6) du véhicule en mode génératrice.

7. Système de contrôle selon l'une quelconque des revendications 1 à 6, **caractérisé en ce que** l'un au moins des signaux d'activation (ACT₁, ACT₂) contient des informations permettant de contrôler le couple et/ou la vitesse de rotation du (des) moteur(s) correspondant(s) (4, 6).

8. Procédé de contrôle du mode de motricité d'un véhicule automobile hybride électrique, comprenant une première phase (P01) de mesure de conditions de roulage et du niveau de charge de la batterie, une deuxième phase (P02) de calcul d'un premier signal d'activation du moteur thermique et d'un second signal d'activation du moteur électrique en fonction des conditions de roulage et du niveau de charge,
dans lequel, lors de la première phase de mesure (P01), on mesure au moins une caractéristique relative au fonctionnement du système de chauffage du véhicule, le premier signal d'activation et le deuxième signal d'activation étant élaborés à partir de la caractéristique relative au fonctionnement du système de chauffage,
**caractérisé en ce que**, lors de la seconde phase, l'on calcule un premier signal d'écart de niveau de charge de la batterie du véhicule au moyen d'un premier comparateur (14) à partir du niveau de charge de la batterie et d'un niveau de charge de référence prédéfini, et l'on émet au moyen d'un correcteur (16) proportionnel dérivé intégral un premier signal de correction du niveau de charge de la batterie en fonction du premier signal d'écart calculé.

## Patentansprüche

1. System (1) zur Steuerung des Antriebsmodus eines Hybridfahrzeugs (2), das mit einem Verbrennungsmotor (6) und mit einem Elektromotor (4) versehen ist, das enthält:
- erste Messeinrichtungen (8) von Fahrbedingungen des Fahrzeugs,
- zweite Messeinrichtungen (9) des Ladepegels der Batterie (3) des Fahrzeugs,
- erste Steuereinrichtungen (12) des Verbrennungsmotors (6),
- zweite Steuereinrichtungen (13) des Elektromotors (4), und
- Recheneinrichtungen (11), die ein erstes Aktivierungssignal (ACT₁) des Verbrennungsmotors (6) und ein zweites Aktivierungssignal (ACT₂) des Elektromotors (4) abhängig von den Fahrbedingungen und vom Ladepegel senden können,
wobei das System (1) außerdem dritte Messeinrichtungen (10) mindestens eines Merkmals bezüglich des Betriebs des Heizsystems (7) des Fahrzeugs enthält, wobei das erste Aktivierungssignal (ACT₁) und das zweite Aktivierungssignal (ACT₂) ausgehend von dem Merkmal bezüglich des Betriebs des Heizsystems erarbeitet werden, **dadurch gekennzeichnet, dass** die Recheneinrichtungen einen ersten Komparator (14) enthalten, der ein erstes Abweichungssignal (ε_{NC}) des Ladepegels der Batterie (3) des Fahrzeugs ausgehend vom Ladepegel und von einem vordefinierten Bezugsladepegel (NC_{REF}) berechnen kann, und dass die Recheneinrichtungen einen ersten PID-Regler (16) enthalten, der ein erstes Korrektursignal (S_{COR1}) des Ladepegels der Batterie abhängig vom vom ersten Komparator (14) berechneten ersten Abweichungssignal (ε_{NC}) senden kann.

2. Steuersystem nach Anspruch 1, **dadurch gekennzeichnet, dass** die ersten Messeinrichtungen (8) der Fahrbedingungen Sensoren zur Messung von Fahrparametern wie Fahrweise, Streckentyp, Beschleunigung oder Bremsen des Fahrzeugs und Stillstand des Fahrzeugs sind.

3. Steuersystem nach Anspruch 1 oder 2, **dadurch gekennzeichnet, dass** das Merkmal bezüglich des Betriebs des Heizsystems die Wassertemperatur (MES₃) des Heizsystems (7) des Fahrzeugs ist.

4. Steuersystem nach Anspruch 3, **dadurch gekennzeichnet, dass** die Recheneinrichtungen einen zweiten Komparator (17) enthalten, der ein zweites Abweichungssignal (ε_{T}) der Wassertemperatur des Heizsystems (7) des Fahrzeugs ausgehend von der Wassertemperatur des Heizsystems und einer vordefinierten Bezugswassertemperatur (T_{REF}) berechnen kann.

5. Steuersystem nach Anspruch 4, **dadurch gekennzeichnet, dass** die Recheneinrichtungen einen zweiten PID-Regler (19) enthalten, der ein zweites Korrektursignal (S_{COR2}) des Ladepegels der Batterie (3) abhängig vom vom zweiten Komparator (17) berechneten zweiten Abweichungssignal (ε_{T}) senden kann.

6. Steuersystem nach einem der Ansprüche 1 bis 5, **dadurch gekennzeichnet, dass** das zweite Aktivierungssignal (ACT₂) des Elektromotors Informationen enthält, die es ermöglichen, den Elektromotor (6) des Fahrzeugs im Generatormodus arbeiten zu lassen.

7. Steuersystem nach einem der Ansprüche 1 bis 6, **dadurch gekennzeichnet, dass** mindestens eines der Aktivierungssignale (ACT₁, ACT₂) Informationen enthält, die es ermöglichen, das Drehmoment und/oder die Drehgeschwindigkeit des entsprechenden Motors (der entsprechenden Motoren) (4, 6) zu steuern.

8. Verfahren zur Steuerung des Antriebsmodus eines Hybridelektrokraftfahrzeugs, das eine erste Phase (P01) der Messung von Fahrbedingungen und des Ladepegels der Batterie, eine zweite Phase (P02) der Berechnung eines ersten Aktivierungssignals des Verbrennungsmotors und eines zweiten Aktivierungssignals des Elektromotors abhängig von den Fahrbedingungen und vom Ladepegel enthält,
wobei in der ersten Messphase (P01) mindestens ein Merkmal bezüglich des Betriebs des Heizsystems des Fahrzeugs gemessen wird, wobei das erste Aktivierungssignal und das zweite Aktivierungssignal ausgehend von dem Merkmal bezüglich des Betriebs des Heizsystems erarbeitet werden,
**dadurch gekennzeichnet, dass** in der zweiten Phase ein erstes Abweichungssignal des Ladepegels der Batterie des Fahrzeugs mittels eines ersten Komparators (14) ausgehend vom Ladepegel der Batterie und von einem vordefinierten Bezugsladepegel berechnet wird, und mittels eines PID-Reglers (16) ein erstes Korrektursignal des Ladepegels der Batterie abhängig vom ersten berechneten Abweichungssignal gesendet wird.

## Claims

1. System (1) for controlling the drivability mode of a hybrid motor vehicle (2) that is equipped with a heat engine (6) and an electric motor (4), comprising:
- first measuring means (8) for measuring driving conditions of the vehicle,
- second measuring means (9) for measuring the level of charge in the battery (3) of the vehicle,
- first control means (12) for controlling the heat engine (6),
- second control means (13) for controlling the electric motor (4), and
- computing means (11) that are able to transmit a first activation signal (ACT₁) for activating the heat engine (6) and a second activation signal (ACT₂) for activating the electric motor (4), depending on the driving conditions and on the charge level,
the system (1) further comprising third measuring means (10) for measuring at least one characteristic relating to the operation of the heating system (7) of the vehicle, the first activation signal (ACT₁) and the second activation signal (ACT₂) being prepared on the basis of the characteristic relating to the operation of the heating system,
**characterized in that** the computing means comprise a first comparison unit (14) that is able to calculate a first deviation signal (ε_{NC}) for the deviation of the charge level of the battery (3) of the vehicle on the basis of the level of charge and a predefined reference charge level (NC_{REF}), and **in that** the computing means comprise a first proportional integral derivative corrector (16) that is able to transmit a first correction signal (S_{COR1}) for the charge level of the battery on the basis of the first deviation signal (ε_{NC}) calculated by the first comparison unit (14).

2. Control system according to Claim 1, **characterized in that** the first measuring means (8) for measuring the driving conditions comprise sensors for measuring driving parameters such as driving type, route type, acceleration or braking of the vehicle and stopping of the vehicle.

3. Control system according to Claim 1 or 2, **characterized in that** the characteristic relating to the operation of the heating system is the temperature of the water (MES₃) of the heating system (7) of the vehicle.

4. Control system according to Claim 3, **characterized in that** the computing means comprise a second comparison unit (17) that is able to calculate a second deviation signal (ε_{T}) for the deviation of the temperature of the water of the heating system (7) of the vehicle on the basis of the temperature of the water in the heating system and a predefined water reference temperature (T_{REF}).

5. Control system according to Claim 4, **characterized in that** the computing means comprise a second proportional integral derivative corrector (19) that is able to transmit a second correction signal (S_{COR2}) for the charge level of the battery (3) on the basis of the second deviation signal (ε_{T}) calculated by the second comparison unit (17).

6. Control system according to any one of Claims 1 to 5, **characterized in that** the second activation signal (ACT₂) for activating the electric motor contains information on the basis of which the electric motor (6) of the vehicle can be made to operate in generator mode.

7. Control system according to any one of Claims 1 to 6, **characterized in that** at least one of the activation signals (ACT₁, ACT₂) contains information on the basis of which the torque and/or the rotational speed of the corresponding engine and/or motor (4, 6) can be controlled.

8. Method for controlling the drivability mode of an electric hybrid motor vehicle, comprising a first phase (P01) of measuring driving conditions and the charge level of the battery, a second phase (P02) of computing a first signal for activating the heat engine and a second signal for activating the electric motor depending on the driving conditions and on the charge level,
wherein the first, measuring phase (P01) involves measuring at least one characteristic relating to the operation of the heating system of the vehicle, the first activation signal and the second activation signal being prepared on the basis of the characteristic relating to the operation of the heating system,
**characterized in that** the second phase involves computing a first signal of the deviation of the charge level of the battery of the vehicle by means of a first comparison unit (14) on the basis of the charge level of the battery and a predefined reference charge level, and involves transmitting, by means of an proportional integral derivative corrector (16), a first battery charge level correction signal on the basis of the calculated first deviation signal.
